# EUROPEAN PATENT APPLICATION

(11) **EP 4 318 321 A1**
(43) Date of publication of application: **07.02.2024**
(21) Application number: 22781616.2
(22) Date of filing: 30.03.2022
(51) Int. Cl.: G06N 3/08, G06N 3/04

(54) **METHOD AND DEVICE FOR PROCESSING DATA CONFORMING TO STATISTICAL DISTRIBUTION**

(30) Priority: 31.03.2021 KR 20210041786
(71) Applicant: Seoul National University R & DB Foundation, Seoul 08826 (KR); Institute for Basic Science, Yuseong-gu Daejeon 34126 (KR)
(72) Inventor: KIM, Changyoung, Seoul 04422 (KR); KIM, Younsik, Seoul 08790 (KR)
(74) Representative: Berggren Oy
(86) International application number: PCT/KR2022/004518
(87) International publication number: WO 2022/211497

(57) **Abstract**

A data processing method according to an embodiment of the present invention comprises the steps of: training a neural network; receiving input data from the outside; and converting the received input data by means of the trained neural network, wherein the training step comprises the steps of: generating one or more pieces of generative data from raw data; converting the generative data into output data by means of the neural network; evaluating the output data on the basis of the raw data; and optimizing the neural network on the basis of the evaluation result, wherein the raw data and the generative data conform to a statistical distribution, and the raw data and the output data have higher signal-to-noise ratios than the generative data.

## Description

### BACKGROUND OF THE INVENTION

### (a) Field of the Invention

The present disclosure relates to a data processing method, in particular, to a method and device of processing data conforming to statistical distribution.

### (b) Description of the Related Art

Spectroscopy such as angle-resolved photoelectron spectroscopy (ARPES) and momentum resolved photoemission electron microscopy (k-PEEM) is used for the research of microscopic structure, for example, electronic structure of a wide range of materials. As the technology advances, its coverage increases to two and three dimensions. Accordingly, the time for acquiring data with given signal-to-noise ratio (SNR) may increase and insufficient data acquisition time may increase noise.

An example of the methods of reducing the noise of data is Gaussian smoothing, but it may cause data blurring that may cause damage on the essential information.

### SUMMARY OF THE INVENTION

### [Technical Problem]

The embodiments of the present disclosure is provided to reduce the data acquisition time and noise.

### [Technical Solution]

A data processing method according to an embodiment of the present disclosure includes: training a neural network; receiving input data from an external source, and converting the input data by the trained neural network, wherein the training comprises: generating one or more generated data from an original data; converting, by the neural network, the generated data into an output data; estimating the output data based on the original data; and optimizing the neural network based on result of the estimation, wherein the original data and the generated data conform to a statistical distribution, and wherein the original data and the output data have signal-to-noise ratio higher than the generated data.

The generating may include generating the generated data at random.

The statistical distribution may include Poisson distribution.

The input data and the original data may include spectroscopy data.

The input data and the original data may include angle-resolved photoelectron spectroscopy (ARPES) count data.

The number of the generated data may be equal to or greater than two.

The neural network may include a deep neural network.

The neural network may include a deep convolutional neural network.

The deep convolutional neural network may include equal to or less than 20 layers.

The estimating may be performed using a loss function; and the loss function may include weighted sum of mean absolute error and multiscale structural similarity index.

A data processing device according to an embodiment of the present disclosure includes: a processor converting input data, wherein the processor comprises: a receiver receiving an original data; a generator generating one or more generated data at random from the original data; a neural network converting the generated data into an output data; and an estimator estimating the output data based on the original data, wherein the original data and the generated data conform to a statistical distribution, wherein the original data and the output data have signal-to-noise ratio higher than the generated data, and wherein the neural network is optimized according to output of the estimator.

The statistical distribution may include Poisson distribution.

The input data and the original data may include angle-resolved photoelectron spectroscopy (ARPES) count data.

The number of the generated data may be equal to or greater than two.

The neural network may include a deep convolutional neural network having 20 layers or less.

The estimator may estimate using a loss function; and the loss function may include weighted sum of mean absolute error and multiscale structural similarity index.

### [Advantageous Effects]

The embodiments of the present disclosure can reduce the data acquisition time with further reduced noise.

### BRIEF DESCRIPTION OF THE DRAWINGS

FIG. 1 is a schematic block diagram of a data processing device according to an embodiment of the present disclosure.
FIG. 2 is a schematic block diagram of a processor of a data processing device according to an embodiment of the present disclosure.
FIG. 3 illustrates an example of original data and generated data according to an embodiment of the present disclosure.
FIG. 4 schematically illustrates a process of training a neural network according to an embodiment of the present disclosure.
FIGs. 5-8 illustrates low count data (a), output data (b), and high count data (c) according to embodiments of the present disclosure, which are energy (in FIGs. 5-7) or intensity (in FIG. 8) as function of momentum.
FIGs. 9 and 10 are graphs illustrating peak locations and widths obtained by line shape analysis of the data shown in FIGs, 7 and 8, respectively.
FIG. 11 is a graph illustrating loss as function of the depth of the convolutional neural network.

### DETAILED DESCRIPTION OF THE EMBODIMENTS

The embodiments of the present disclosure will be described in detail with reference to accompanying drawings such that those skill in the art can easily implement the present invention. However, the embodiments of the present invention may not be limited thereto and achieved in various forms.

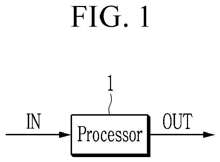

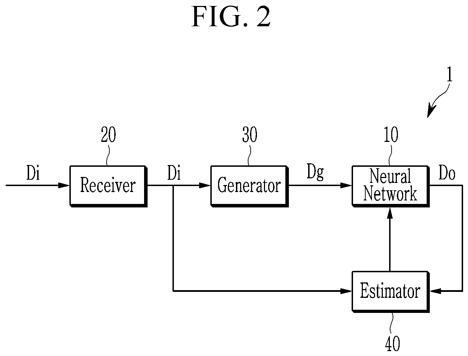

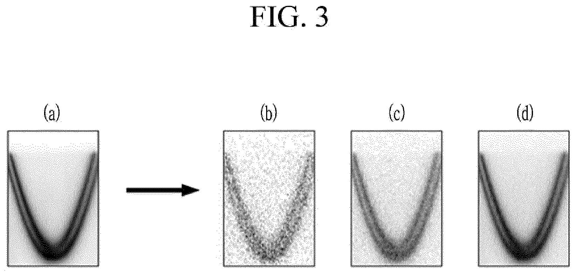

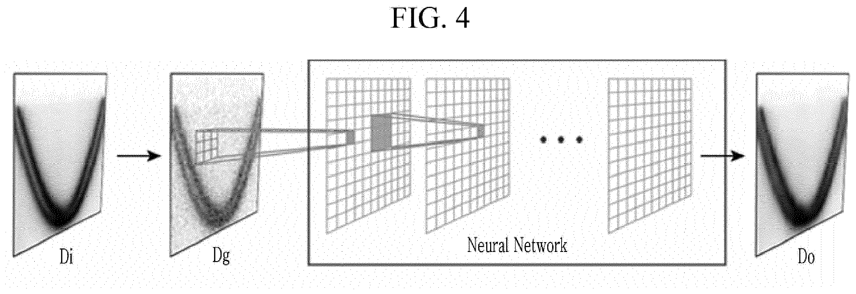

FIG. 1 is a schematic block diagram of a data processing device according to an embodiment of the present disclosure, FIG. 2 is a schematic block diagram of a processor of a data processing device according to an embodiment of the present disclosure, FIG. 3 illustrates an example of original data and generated data according to an embodiment of the present disclosure, and FIG. 4 schematically illustrates a process of training a neural network according to an embodiment of the present disclosure.

Referring to FIG. 1, a data processing device according to an embodiment of the present disclosure includes the processor 1 that processes input data IN to generate output data OUT.

The input data IN may include spectroscopy data, for example, the data measured using angle-resolved photoelectron spectroscopy (ARPES), momentum resolved photoemission electron microscopy (k-PEEM), etc. An example of the input data IN may include ARPES count data.

The processor 1 may convert the input data IN to produce the output data OUT, which has signal-to-noise ratio (SNR) higher than that of the input data IN. For example, when the input data IN is count data, the output data OUT from the processor 1 may be similar to those higher than the input data IN.

Referring to FIG. 2, the processor 1 may include a neural network 10, a receiver 20, a generator 30, and an estimator 40.

The neural network 10 may include, for example, deep neural network or deep convolutional neural network, and may be trained using training data.

The training data may include a plurality of data pairs of original data Di and generated data Dg.
the receiver 20 is connected to the generator 30 and the estimator 40, and may receive the original data Di from an external source such as ARPES electronic analyzer (not shown), and transmit the original data Di to the generator 30 and the estimator 40.

The generator 30, connected to the receiver 20 and the neural network 10, may generate the generated data Dg from the original data Di received from the receiver 20 using the statistical distribution to which the original data Di conforms and may transmit the generated data Dg to the neural network 10. The original data Di and the generated data Dg may conform to given statistical distribution such as Poisson distribution, but the embodiment is not limited thereto. The generated data Dg may be randomly generated from the original data Di by the generator 30, and two or more generated data Dg may be generated from one original datum Di. The generation of the generated data Dg may reduce overfitting of the neural network 10 during the training. For data augmentation, the data set may be randomly rotated or flipped.

According to an embodiment of the present disclosure, the generated data Dg has a lower SNR than the original data Di. For example, the original data Di may be ARPES high count data while the generated data Dg may be low count data. In FIG. 3, (a) shows original data, i.e., ARPES high count data, and (b) to (d) show examples of low count data generated from the original data in (a), where the counts of (b), (c) and (d) are 10⁴, 10⁵, and 10⁶, respectively. It is understood that the generated data becomes closer to the original count and the noise decreases more as the count becomes higher.

Referring to FIG. 2 again, the neural network 10 may convert an input, i.e., the generated data Dg to generate output data Do. The output data Do may have higher SNR than the generated data Dg.

The estimator 40 may estimate the quality of the output data Do with reference to the original data Di. The estimation of the quality of the output data Do may use loss function or cost function, and the loss function may be defined, for example, as weighted sum of mean absolute error and multiscale structural similarity index. The estimation result may be fed back to the neural network 10. The neural network 10 may perform optimization, for example, adjusting inner parameters, and may repeat the generation of the output data Do, thereby proceeding the training. An example of optimization may include Adam optimization.

During the training, the intensity of data may be randomly adjusted, and overfitting may be carefully checked using a validation data set which is not used in the training.

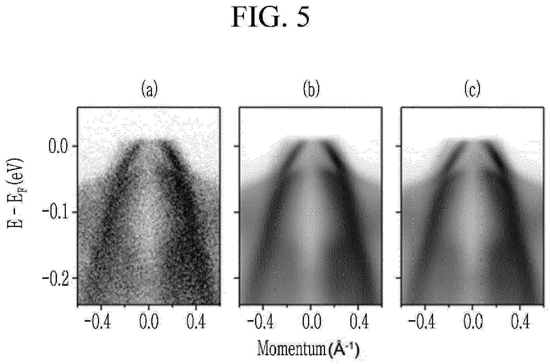

Some experimental examples of a data processing device according to embodiments of the present disclosure will be described in detail with reference to FIGs. 5-11.

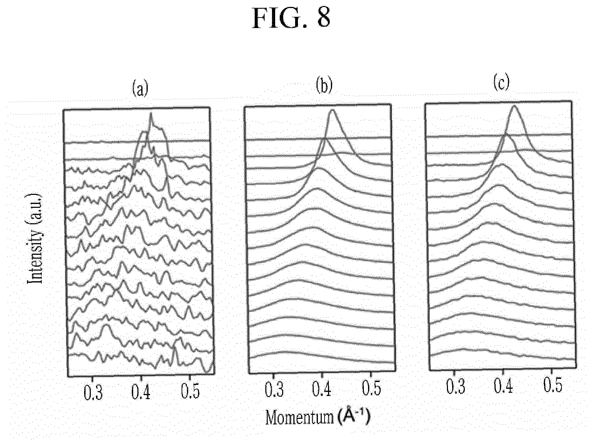

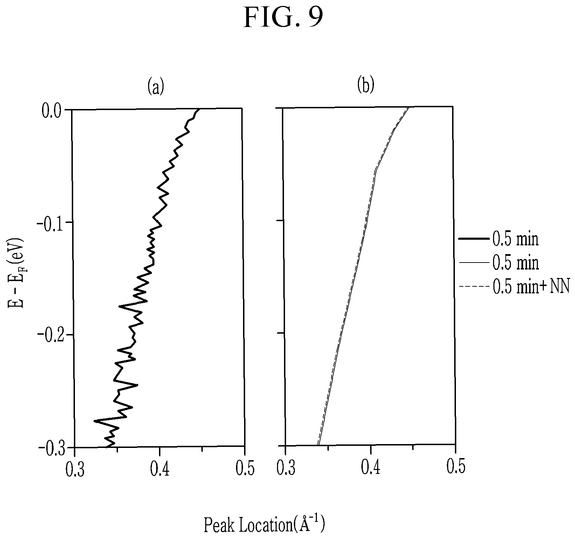

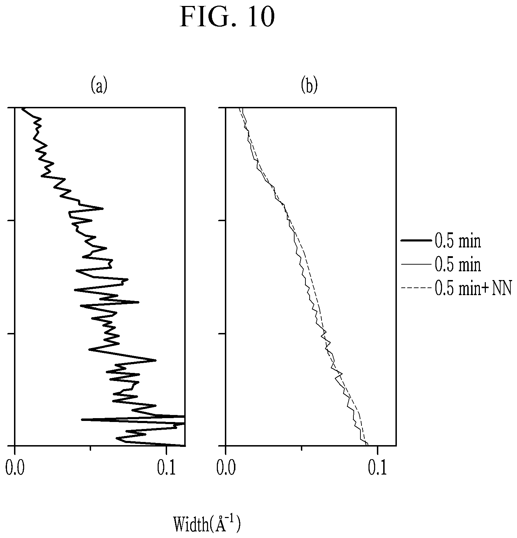

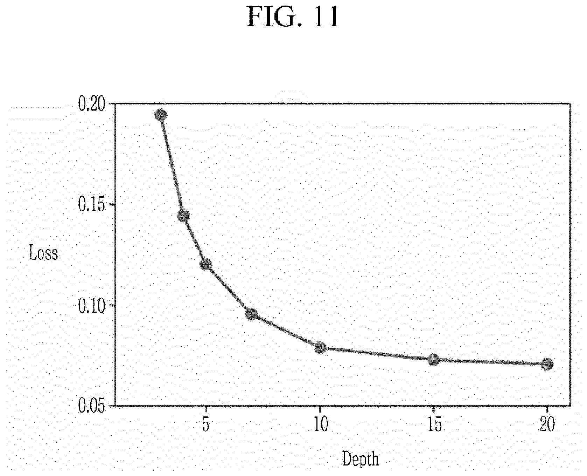

FIGs. 5-8 illustrate low count data (a), output data (b), and high count data (c) according to embodiments of the present disclosure, which are energy (in FIGs. 5-7) or intensity (in FIG. 8) as function of momentum, FIGs. 9 and 10 are graphs illustrating peak locations and widths obtained by line shape analysis of the data shown in FIGs, 7 and 8, respectively, and FIG. 11 is a graph illustrating loss as function of the depth of the convolutional neural network.

A deep network with 20 convolution layers was used in these experiments. Each layer of the convolutional neural network has a filter number of 64 and a kernel size of 3. An Adam optimizer was adopted to train the network for 150 epochs. The learning rate was initially set to be 5 × 10⁻⁴ and multiplied by 0.1 after every 50 epochs. For the training data set, 50 different original high-count ARPES data were used, and 50 low-count data for each original data were randomly generated, resulting in a total of 2500 low-count data.

Referring to FIG. 5, ARPES data of FeSe along the M-Γ-M cut for 0.5 min (a) and 50 min (c) were obtained. The data (a) acquired for 0.5 min was input to the neural network to obtain output data (b), which in turn was compared with the data (c) acquired for 50 min. The data acquired for 0.5 min shows a high level of noise due to the low total counts. As shown in FIG. 5, although the data (a) acquired for 0.5 min shows a high level of noise, the output data (b) generated and denoised from the data (a) by the neural network is very similar to the data (c) acquired for 50 min.

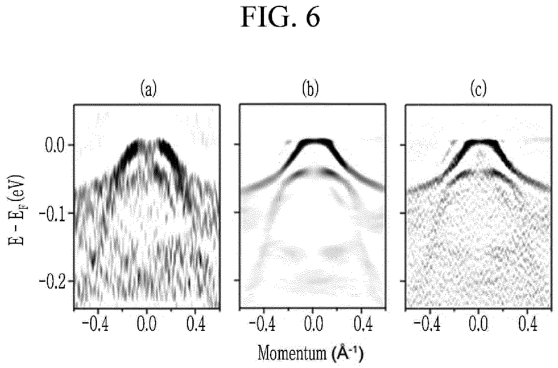

Referring to FIG. 6, for the second derivative of the data shown in FIG. 5, 0.5 min data (a) and 50 min data (c) were obtained, and output data (b) was obtained by inputting the 0.5 min data (a) to the neural network and compared with the 50 min data (c). As shown in FIG. 6, the 0.5 min data (a) is barely visible, but the output data (b) processed by the neural network shows very clear shape with nearly no noise like the 50 min data (c).

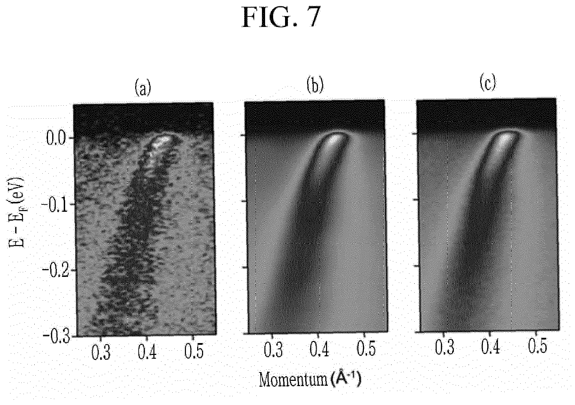

Referring to FIGs. 7 and 8, 0.5 min ARPES data (a) and 50 min ARPES data (c) of Bi-2212 along the nodal cut were obtained. Output data (b) was obtained by inputting the 0.5 min data (a) to the neural network and compared with the 50 min data (c). As shown in FIG. 7, the output data (b) has a very high SNR, which is very similar to the 50 min data (c), compared with highly-noisy 0.5 min data (a). The improvement of the SNR is more dominant in momentum distribution curve (MDC) shown in FIG. 8. Referring to FIGs. 9 and 10, in the graph of peak location and width obtained by performing line shape analysis fitting MDC, 0.5 min data processed by the neural network is almost identical to 50 min data as shown in (b) of FIGs. 9 and 10, demonstrating that the data processing preserves the quantitative information of the band structure.

The reason why the data processing, for example, ARPES data processing is effective for ARPES data as described above may be the correlation of the data among the neighboring pixels. Two major factors contribute to the correlation. First, the dimension for ARPES features is larger than the pixel size, leading to occupation of several pixels for an ARPES feature. Thus, if the value at a pixel is large, it is likely for neighboring pixels to have a large value. Second, the length scale over which the band structure changes is larger than the data pixel size. Hence, the band structure does not change abruptly in a pixel. This means that the band structure has an approximate translational symmetry in a short length scale. Even if the information at a pixel is corrupted with noise, the value at the pixel can be recovered from the most statistically probable value inferred from adjacent pixel values. Therefore, a data set carries more information than just the pixel-wise sum of information. With the additional information, the seemingly imperfect information of the noisy data can be recovered.

As such, since the information at a pixel is compensated by the information from adjacent pixel values, better performance is expected if there are more neighboring pixels. Therefore, the data processing according to embodiments of the present disclosure is more effective for the higher-dimensional data than for the lower dimensional data. The data processing according to embodiments of the present disclosure is more useful in higher dimension because the data acquisition time for higher-dimensional data is longer.

Referring to FIG. 11, it is shown that the information loss decreases, for example, monotonically decreases with increasing depth, i.e., number of layers of the convolutional neural network. The network deeper than 20 layers could not be stably trained due to gradient vanishing/exploding.

The embodiments of the present disclosure can reduce the data acquisition time with further reduced noise.

### [Industrial Applicability]

The embodiments of the present disclosure can reduce the data acquisition time with further reduced noise.

## Claims

1. A data processing method comprising:
training a neural network;
receiving input data from an external source, and
converting the input data by the trained neural network,
wherein the training comprises:
generating one or more generated data from an original data;
converting, by the neural network, the generated data into an output data;
estimating the output data based on the original data; and
optimizing the neural network based on result of the estimation,
wherein the original data and the generated data conform to a statistical distribution, and
wherein the original data and the output data have signal-to-noise ratio higher than the generated data.

2. The method of claim 1, wherein the generating comprises generating the generated data at random.

3. The method of claim 1, wherein the statistical distribution comprises Poisson distribution.

4. The method of claim 1, wherein the input data and the original data comprises spectroscopy data.

5. The method of claim 4, wherein the input data and the original data comprises angle-resolved photoelectron spectroscopy (ARPES) count data.

6. The method of claim 1, wherein the number of the generated data is equal to or greater than two.

7. The method of claim 1, wherein the neural network comprises a deep neural network.

8. The method of claim 1, wherein the neural network comprises a deep convolutional neural network.

9. The method of claim 8, wherein the deep convolutional neural network comprises equal to or less than 20 layers.

10. The method of claim 1, wherein:
the estimating is performed using a loss function; and
the loss function comprises weighted sum of mean absolute error and multiscale structural similarity index.

11. A data processing device comprising:
a processor converting input data,
wherein the processor comprises:
a receiver receiving an original data;
a generator generating one or more generated data at random from the original data;
a neural network converting the generated data into an output data; and
an estimator estimating the output data based on the original data,
wherein the original data and the generated data conform to a statistical distribution,
wherein the original data and the output data have signal-to-noise ratio higher than the generated data, and
wherein the neural network is optimized according to output of the estimator.

12. The device of claim 11, wherein the statistical distribution comprises Poisson distribution.

13. The device of claim 11, wherein the input data and the original data comprises angle-resolved photoelectron spectroscopy (ARPES) count data.

14. The device of claim 11, wherein the number of the generated data is equal to or greater than two.

15. The device of claim 11, wherein the neural network comprises a deep convolutional neural network having 20 layers or less.

16. The device of claim 11, wherein:
the estimator estimates using a loss function; and
the loss function comprises weighted sum of mean absolute error and multiscale structural similarity index.
